Europäisches Patentamt

European Patent Office

Office européen des brevets

(19)

(11) Veröffentlichungsnummer : **0 485 728 A2**

(12) # EUROPÄISCHE PATENTANMELDUNG

(21) Anmeldenummer : **91116864.9**

(22) Anmeldetag : **02.10.91**

(51) Int. Cl.$^5$ : **G01B 11/16**

(30) Priorität : **13.11.90 DE 4036120**

(43) Veröffentlichungstag der Anmeldung :
**20.05.92 Patentblatt 92/21**

(84) Benannte Vertragsstaaten :
**DE FR GB IT**

(71) Anmelder : **Steinbichler, Hans, Dr.**
**Am Bauhof 4**
**W-8201 Neubeuern (DE)**

(72) Erfinder : **Steinbichler, Hans, Dr.**
**Am Bauhof 4**
**W-8201 Neubeuern (DE)**
Erfinder : **Sun, Junli**
**Helmpertstrasse 15**
**W-8000 München 2 (DE)**

(74) Vertreter : **Zinnecker, Armin, Dipl.-Ing.**
**Lorenz-Seidler-Gossel et al**
**Widenmayerstrasse 23**
**W-8000 München 22 (DE)**

(54) **Verfahren und Vorrichtung zur Bestimmung der Wegänderung von Strahlen, vorzugsweise Lichtstrahlen.**

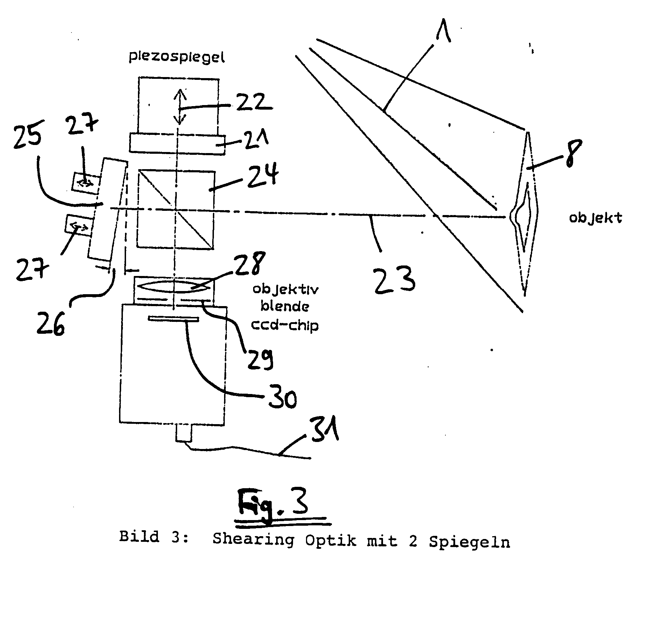

(57)    Ein Verfahren dient zur Bestimmung der Wegänderung von Strahlen, vorzugsweise Lichtstrahlen. Ein zu messendes Objekt (8) wird mit kohärenter Strahlung (1), vorzugsweise Laserlicht, einer bestimmten Frequenz bestrahlt. Die von dem Objekt (8) reflektierte Strahlung wird in eine Bildebene (30) abgebildet. Dieser Vorgang wird anschließend bei verformten Objekt (8) wiederholt. Um ein derartiges Verfahren zu vereinfachen und zu verbessern, wird das Bild durch einen in der Bildebene angeordneten optoelektronischen Sensor (30), vorzugsweise eine Videokamera oder ein CCD-Array, registriert (Fig. 3).

Bild 3:  Shearing Optik mit 2 Spiegeln

EP 0 485 728 A2

Die Erfindung betrifft ein Verfahren zur Bestimmung der Wegänderung von Strahlen, vorzugsweise Lichtstrahlen, nach dem Oberbegriff des Anspruchs 1. Weiterhin betrifft die Erfindung eine Vorrichtung zur Durchführung eines derartigen Verfahrens nach dem Oberbegriff des Anspruchs 9.

Ein Verfahren zur Bestimmung der Wegänderung von Lichtstrahlen nach dem Oberbegriff des Anspruchs 1 ist aus der US-PS 41 39 302 bekannt. Bei dem vorbekannten Verfahren wird ein zu messendes Objekt mit kohärentem Licht, vorzugsweise Laserlicht, flächenhaft beleuchtet. Das von dem Objekt reflektierte Licht wird durch eine Shearing-Optik in eine Bildebene abgebildet, in der sich ein lichtempfindlicher Film befindet. Bei dieser Beobachtung mit einer Shearing-Optik werden zwei benachbarte Strahlen in der Bildebene derart überlagert, daß sie Interferenz erzeugen. Bei einigen Shearing-Optiken (z.B. Blende mit niederen Aperturen) werden die Strahlen auch außerhalb der Bildebene überlagert. Die Interferenz der Strahlen wird auf den lichtempfindlichen Film aufgezeichnet.

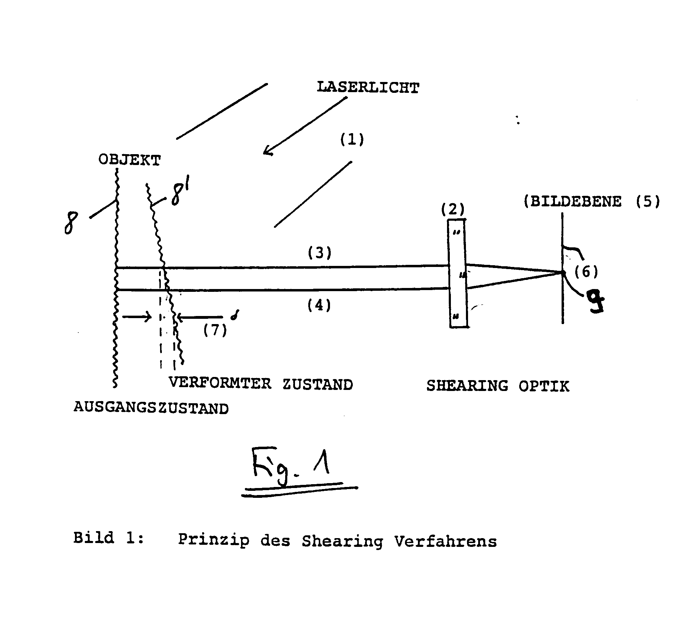

Das vorbekannte Verfahren wird nachfolgend anhand der Figur 1 erläutert. Das Objekt 8 wird mit kohärentem Licht, nämlich Laserlicht 1, flächenhaft beleuchtet. Die von dem Objekt 8 reflektierte Strahlung 3, 4 wird durch eine Shearing-Optik 2 in die Bildebene 5 abgebildet, in der sich ein lichtempfindlicher Film 6 befindet. Bei der Beobachtung mit der Shearing-Optik 2 werden die zwei benachbarten Strahlen 3, 4 in der Bildebene 5 überlagert; sie erzeugen in der Bildebene 5 Interferenz. Diese Interferenz wird auf dem lichtempfindlichen Film 6 aufgezeichnet.

Der Abstand der zwei Strahlen 3, 4, die durch die Shearing-Optik 2 in der Bildebene 5 zur Interferenz gebracht werden, hängt von der Shearing-Optik ab. Dieser Abstand kann durch eine Änderung der Shearing-Optik geändert werden. In der Praxis kann der Abstand der überlagerten Strahlen 3, 4 Bruchteile eines Millimeters bis zu einige Zentimeter betragen (je nach Anwendungsfall).

Bei einer Verformung des Objekts 8 ändern die beiden Strahlen 3, 4 ihre Länge unterschiedlich. Das Objekt kann sich verformen durch Aufbringen einer mechanischen oder thermischen Last oder durch sonstige Belastungen aller Art. In der Figur 1 ist die Oberfläche des Objekts im Ruhezustand (Ausgangszustand, unbelasteter Zustand, erster Zustand) mit 8 bezeichnet, im belasteten (verformten) Zustand mit 8′. Da die Oberfläche im verformten Zustand 8′ im Winkel zu der Oberfläche im Ausgangszustand 8 verläuft, entsteht im verformten Zustand 8′ die Wegdifferenz 7 der beiden Strahlen 3, 4 gegenüber dem Ausgangszustand 8. Entsprechend wird die Intensität in der Bildebene 5 durch die Überlagerung (Interferenz) der Strahlen 3, 4 geändert. Diese Intensitätsänderung im Bildpunkt 9 ist ein Maß für die Differenz 7 der Wegänderungen beider Strahlen, ausgehend von der Lichtquelle des Laserlichts 1 über den Objektpunkt bis zum Bildpunkt 9.

Mit dem vorbekannten Verfahren wird damit also primär der Gradient der Verformung in Richtung der Shearing-Optik (des Shearing-Winkels) gemessen. Die Differenz der Weglängen beider Strahlen 3, 4 kann auf Bruchteile der Wellenlänge des verwendeten Lichts (diese liegt in der Größenordnung von 0,5 Mikrometer) genau gemessen werden. Ein Vorteil dieser Shearing-Methode gegenüber holografisch-interferometrischen bzw. Speckle-interferometrischen Methoden liegt darin, daß Ganzkörperverschiebungen des Objekts (Parallelverschiebungen) oder des optischen Systems die Messung weniger beeinflussen, da der Verformungsgradient gemessen wird. Der Meßaufbau wird damit unempfindlicher gegen äußere Störungen. Wie man anhand der Figur 1 sehen kann, ändert sich an der Messung nichts, wenn das Objekt sowohl im Ausgangszustand als auch verformten Zustand einen bestimmten Weg in Richtung der Shearing-Optik verschoben wird. Eine derartige Parallelverschiebung in Richtung der optischen Achse der Shearing-Optik führt also nicht zu einem Meßfehler.

Bei dem vorbekannten Verfahren entsteht durch die Überlagerung von zwei Strahlenbündeln in der Bildebene ein zusätzliches Streifensystem aus vorwiegend parallelen Interferenzlinien, das bei der Betrachtung des Shearing-Bildes mit entsprechenden optischen Filtern oder über digitale Bildverarbeitungsmethoden eliminiert werden kann.

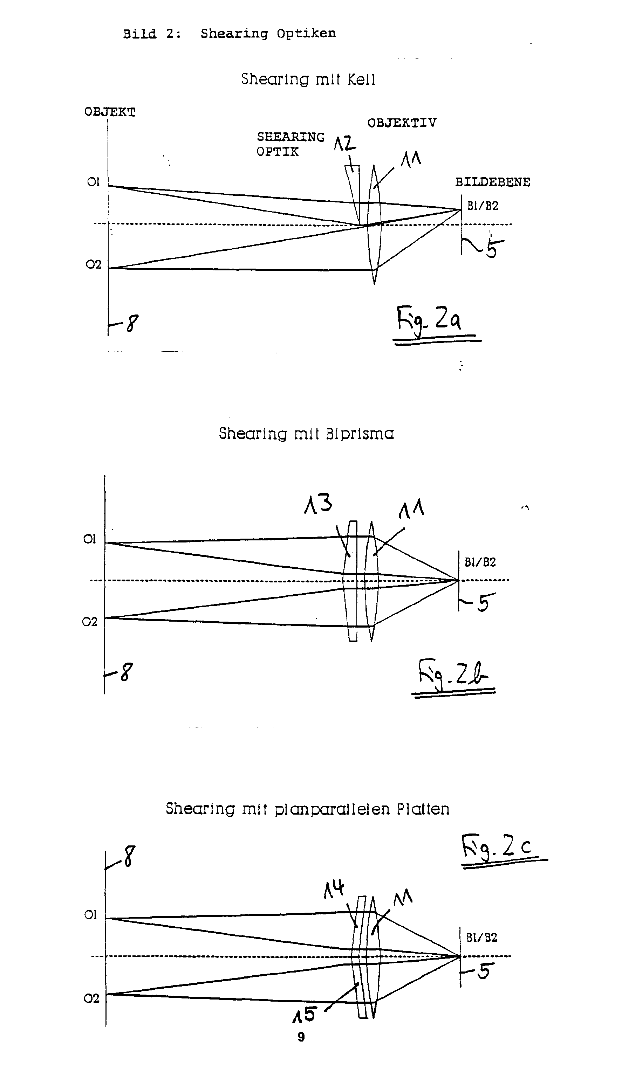

Shearing-Optiken sind bereits bekannt. Einige bekannte Shearing-Optiken sind in Figur 2 dargestellt.

Die Figur 2 a zeigt eine Shearing-Optik mit einem Keil. Neben einer üblichen Linse bzw. einem üblichen Linsensystem 11 ist in einer Hälfte (hier: obere Hälfte) der Optik ein Keil 12 angeordnet, der bewirkt, daß zwei verschiedene, beabstandete Punkte O 1 und O 2 auf der Objektoberfläche in denselben Bildpunkt B 1/B 2 der Bildebene abgebildet werden.

Die Figur 2 b zeigt eine Shearing-Optik, bei der vor der Optik 11 ein Biprisma 13 angeordnet ist.

In der Figur 2 c sind vor der Optik 11 zwei planparallele Platten 14, 15 angeordnet, die in einem Winkel zueinander verlaufen.

Shearing-Systeme, die mit zwei oder mehr Aperturen bzw. einem Keil vor dem Abbildungsobjektiv arbeiten, sind aus den Veröffentlichungen Dr. Samir Malek, Speckle-Shearing-Moire Prinzip als Prüfmethode zur Erkennung von Fehlern in Faserverbundwerkstoffen, Vereinigte Flugtechnische Werke - Fokker GmbH, Hünefeldstraße 1 - 5, 2800 Bremen, Reg. Nr. 605, Vortrag im Rahmen des technisch-wissenschaftlichen Seminars - Prüftechnik und Prüfstandstechnik - auf der Hannover-Messe am 23. April 1979, und aus Y.Y. Hung und C.Y.

2

Liang, Image-Shearing-Camera for direct measurement of surface strains, applied optics, Vol. 18, No. 7, 1. April 1979, bekannt.

Aufgabe der Erfindung ist es, das eingangs angegebene Verfahren zu verbessern und zu vereinfachen sowie eine Vorrichtung zur Durchführung des erfindungsgemäßen Verfahrens vorzuschlagen.

Nach der Erfindung wird diese Aufgabe bei einem Verfahren nach dem Oberbegriff des Anspruchs 1 dadurch gelöst, daß das Bild durch einen in der Bildebene angeordneten optoelektronischen Sensor, vorzugsweise eine Videokamera oder ein CCD-Array, registriert wird. Hierdurch ist eine besonders einfache Bildverarbeitung möglich. Bisher war es erforderlich, mehrere Bilder auf einem lichtempfindlichen Film zu überlagern, was mühsam und zeitraubend ist. Die Verwendung eines optoelektronischen Sensors, vorzugsweise einer Videokamera oder eines CCD (Charge Coupled Device)-Arrays, ermöglicht eine schnelle und einfache Bildverarbeitung und Bilddarstellung. Im Gegensatz zu dem aus dem US-Patent 41 39 302 bekannten Shearing-Verfahren wird das Bild nicht auf Fotomaterial aufgenommen und nach der Entwicklung des Films rekonstruiert; die Aufnahme des Bildes wird vielmehr direkt auf einem optoelektronischen Sensor registriert. Ferner kann auf einfache Weise eine rechnergestützte Auswertung erfolgen.

Vorteilhafte Weiterbildungen sind in den Unteransprüchen beschrieben.

Nach einer vorteilhaften Weiterbildung wird das von dem optoelektronischen Sensor registrierte Bild des in einem ersten Zustand befindlichen Objekts in einem Speicher gespeichert. Das von dem optoelektronischen Sensor registrierte Bild des in einem zweiten Zustand befindlichen Objekts wird davon subtrahiert. Das Ergebnis dieser Subtraktion kann auf einem Bildschirm dargestellt werden. Abspeicherung, Subtraktion und Darstellung erfolgen jeweils punktweise, also für jeden Punkt des Objekts in einem bestimmten zu betrachtenden Bereich des Objekts. Der erste Zustand des Objekts ist vorzugsweise der Ruhezustand (Ausgangszustand, unbelasteter Zustand), der zweite Zustand des Objekts ist vorzugsweise der belastete Zustand (verformte Zustand). Bei der Messung wird demnach das Bild des Ausgangszustandes des Objekts über den optoelektronischen Sensor in den Bildspeicher abgelegt (dies kann der Bildspeicher eines Rechners sein). Das Bild des verformten Zustand des Objekts wird von dem im Bildspeicher abgelegten Bild subtrahiert und auf einem Bildschirm dargestellt.

Nach einer weiteren vorteilhaften Weiterbildung werden bei in einem ersten Zustand befindlichem Objekt mehrere definiert phasenverschobene Bilder registriert. Daraus wird für jeden Bildpunkt die Phase bestimmt. Dieses Verfahren wird dann bei in einem zweiten Zustand befindlichen Objekt wiederholt. Vorteilhaft ist es, wenn für jeden Bildpunkt die Differenz der Phasen bestimmt und gegebenenfalls dargestellt wird, beispielsweise auf einem Bildschirm. Diese Auswertung kann rechnergestützt erfolgen.

Von dem optoelektronischen Sensor werden Lichtintensitäten gemessen. Der optoelektronische Sensor mißt für jeden Bildpunkt eine bestimmte Lichtintensität, die aus der Interferenz der oben beschriebenen zwei Strahlen resultiert. Diese Intensität liefert ein Maß für die Phase zwischen den beiden Strahlen. Allein aus einer einzigen Messung ist es jedoch nicht möglich, die Phasenlage zwischen den beiden Strahlen eindeutig zu bestimmen. Für die Intensität, die durch die Interferenz erzeugt wird und die von dem optoelektronischen Sensor gemessen werden kann, gilt nämlich folgende Formel:

$$I = a + K \cdot \cos^2 \phi$$

Hierin bedeuten:

I = Intensität im Bildpunkt

a = Hintergrundhelligkeit Bildpunkt

K = Kontrast

$\phi$ = Phasenverschiebung

Die Auswertung erfolgt dadurch, daß mehrere phasenverschobene Bilder eines Zustands des Objekts bestimmt und gespeichert (eingelesen) werden. Es werden also mehrere Bilder eines Zustandes eingelesen, die sich durch eine definierte Phasenverschiebung von einander unterscheiden. Hierdurch kann für den untersuchten Zustand des Objekts die Phase eindeutig bestimmt werden. Wenn man sowohl für einen ersten als auch für einen zweiten Zustand des Objekts auf diese Weise die Phase bestimmt, kann man die Phasendifferenz zwischen beiden Zuständen eindeutig berechnen und bestimmen. Man erhält auf diese Weise den Gradienten der Verformung des Objekts.

Die Auswertung über eine Phasenverschiebung ist aus interferometrischen Verfahren bekannt, wurde aber noch nicht für das Shearing-Verfahren angewendet. Die Auswertung über eine Phasenverschiebung ist beispielsweise aus der EP-OS 299 490 (= DE-OS 37 23 555) bekannt; der Inhalt dieser Vorveröffentlichungen wird hiermit ausdrücklich zum Inhalt der vorliegenden Anmeldung gemacht.

In der oben angegebenen Gleichung wird die Intensität I gemessen. Die drei anderen Größen in dieser Gleichung sind zunächst unbekannt. Gesucht ist die Phasenverschiebung $\phi$. Es ist also erforderlich, insgesamt drei Gleichungen für drei Unbekannte zu gewinnen. Dies erfolgt dadurch, daß die Intensität bei definierten Phasenverschiebungen gemessen wird. Es wird also eine definierte Phasenverschiebung erzeugt, und bei jeder Phasenverschiebung wird die Intensität gemessen. Man kann nacheinander mehrere phasenverschobene Bilder abspeichern (einlesen). Anschließend kann daraus die Interferenzphase für jeden Bildpunkt berechnet werden, und zwar aus den gemessenen Intensitäten. Die Einzelheiten sind in der genannten EP-OS 299 490 (bzw. der zugehörigen DE-OS) beschrieben. Im allgemeinen sind zur eindeutigen Berechnung der Phase drei Bilder (Aufnahmen) erforderlich. Es sind allerdings zwei Bilder ausreichend, wenn der Kontrast oder die Untergrundhelligkeit konstant sind bzw. als konstant angesehen werden können.

Im Endergebnis erhält man den Gradienten der Verformung des Objekts, und zwar für jeden betrachteten Objektpunkt.

Bei der Auswertung, die rechnergestützt erfolgen kann, werden von beiden Belastungszuständen mehrere (beispielsweise drei) phasenverschobene Bilder aufgenommen und abgespeichert bzw. in den Rechner eingelesen. Damit kann dann die Phase für jeden Bildpunkt der beiden Objektzustände berechnet werden. Durch Differenzbildung läßt sich dann für jeden Bildpunkt die Phasenänderung und damit die Wegänderung der einzelnen Lichtstrahlen berechnen.

Die Phasenverschiebung kann durch eine Bewegung (Verschiebung) eines Teils der Shearing-Optik erzeugt werden. Beispielsweise kann in der Shearing-Optik, die in Figur 2 a dargestellt ist, der Keil 12 verschoben werden. Durch die Phasenverschiebung wird in der oben angegebenen Gleichung die Größe $\phi$ durch die Größe $\phi + b \cdot \phi$ ersetzt. Man kann nacheinander mehrere phasenverschobene Bilder, beispielsweise drei um 120° phasenverschobene Bilder, aufnehmen und abspeichern (bzw. in den Rechner einlesen) und erhält damit die Interferenzphase für jeden Bildpunkt.

Der Keil 12 in der Figur 2 a wird zur Erzeugung einer Phasenverschiebung in der Ebene der Strahlen verschoben, also in der Zeichenebene der Figur 2 a. Weiterhin muß die Verschiebung des Keils 12 eine Komponente enthalten, die parallel zur Bildebene 5 gerichtet ist.

Bei den in der Figur 2 dargestellten Shearing-Optiken sind zur Erzeugung der erforderlichen Phasenverschiebungen relativ große Wege im Bereich mehrerer Lichtwellenlängen notwendig, da die Interferenzphase in der Bildebene beim Einlesen von beispielsweise drei phasenverschobenen Bildern um jeweils 120° verschoben werden sollte. Das Bauteil der Shearing-Optik, also beispielsweise der Keil 12 in Figur 2 a, muß dann um ein Mehrfaches der Wellenlänge verschoben werden. Dies erfordert einen Zeitaufwand, der unerwünscht ist und der bei dynamischen Verformungen eine Messung erheblich erschweren oder sogar unmöglich machen kann.

Durch eine andere Shearing-Optik, die in Figur 3 dargestellt ist, wird dieser Nachteil vermieden. Diese Shearing-Optik besitzt zwei Spiegel und einen Strahlteiler. Die Phasenverschiebung wird durch eine Bewegung des Spiegels 21 in Richtung senkrecht zu seiner Oberfläche, also in Richtung des Doppelpfeils 22, erzeugt. Der Spiegel 21 ist vorzugsweise piezokeramischer Spiegel, also eine Spiegel mit piezokeramischer Verstellung. Durch die Anordnung der Figur 3 reduziert sich die erforderliche Verschiebung des Spiegels 21 auf Bruchteile einer Wellenlänge; diese Verschiebung ist also wesentlich geringer als die Verschiebung, die bei den Bauteilen der Figur 2 erforderlich ist. Wenn drei um 120° phasenverschobene Bilder aufgenommen werden sollen, muß der Spiegel 21 jeweils nur um 1/6 einer Wellenlänge verschoben werden.

Diese Verschiebungen können damit sehr schnell erfolgen, beispielsweise sogar zwischen zwei Videotakten (entspricht etwa 40 Millisekungen). Die in der Figur 3 dargestellt Anordnung des Shearing-Aufbaus mit zwei Spiegeln und einem Strahlteiler ist bereits aus der Literatur (R. Jones, C. Wykes, Holographic and Speckle Interferometry, Cambridge University Press) als solche bekannt.

Nach einer weiteren vorteilhaften Weiterbildung wird der Gradient der Verformung in zwei Richtungen bestimmt, wobei diese zwei Richtungen im Winkel zueinander verlaufen und vorzugsweise rechtwinklig zu einander verlaufen. Damit der Gradient der Verformung in zwei Richtungen bestimmt werden kann, wird in der Literatur (Dr. Samir Malek, Speckle-Shearing-Moire Prinzip ... -s.o.) eine Blende mit vier Aperturen, die ein Shearing in zwei auf einander senkrecht stehenden Richtungen erzeugt, vorgeschlagen.

Nach dem erfindungsgemäßen Vorschlag werden zwei oder mehrere verschiedene Laser mit unterschiedlichen Wellenlängen (Frequenzen, Farben) benutzt. Das Shearing erfolgt in zwei Richtungen mit bekannten optischen Komponenten; diese Richtungen verlaufen im vorzugsweise rechten Winkel zueinander. Die Bildaufnahme erfolgt mit einem farbempfindlichen Sensor, vorzugsweise einer Farbvideokamera. Die Sensoren können allerdings auch durch entsprechende Farbfilter oder Interferenzfilter speziell auf die emitierten Wellenlängen der verschiedenen Laser abgestimmt werden.

Die erfindungsgemäße Vorrichtung ist im Anspruch 9 beschrieben. Vorteilhafte Weiterbildungen dieser Vorrichtung sind Gegenstand der weiteren Unteransprüche.

Durch die Erfindung wird ein Verfahren zur rechnergestützten Auswertung von Bildern geschaffen, die mit der Shearografie-Methode erzeugt werden. Das Verfahren kann dazu benützt werden, um den Gradienten der Verformung von lichtstreuenden Objekten unter bestimmten Belastungen oder Gradienten der Dichte (Brechzahl) von transparenten Medien zu messen und quantitativ mit hoher Genauigkeit auszuwerten. Das Verfahren kann angewendet werden für die Ermittlung von Verformungen, Dehungen und Spannungen von Objekten unter beliebiger statischer oder dynamischer Belastung, für die Messung von Wärme- und Stoffaustauschvorgängen, für die zerstörungsfreie Prüfung von Bauteilen und für dreidimensionale Konturmessungen. In einem Bildpunkt werden vom Objekt reflektierte Strahlen überlagert. Die Interferenzphase wird in jedem Bildpunkt durch Einlesen mehrerer phasenverschobener Bilder für einzelne Objektzustände bestimmt. In einem Bildpunkt werden zwei vom Objekt reflektierte Strahlen überlagert. Das Bild wird auf einem optoelektronischen Sensor erzeugt, dessen Signal direkt elektronisch gespeichert wird. Die Phasenverschiebung wird durch Verstellen der Shearing-Optik erzeugt. Es ist möglich, zwei Bilder zu überlagern, die über Strahlteiler und Spiegel erzeugt werden. Die Phasenverschiebung wird durch die Bewegung eines oder mehrerer Spiegel eingeführt.

Ausführungsbeispiele der Erfindung werden nachstehend anhand der beigefügten Zeichnung im einzelnen erläutert. In der Zeichnung zeigt

Figur 1 das Prinzip des Shearing-Verfahrens in einer schematischen Darstellung,

Figur 2 verschiedene Shearing-Optiken,

Figur 3 eine Shearing-Optik mit zwei Spiegeln und einem Strahlteiler und

Figur 4 eine Abwandlung der in der Figur 3 gezeigten Shearing-Optik für zwei verschiedene Wellenlängen.

Bei der Ausführungsform gemäß Figur 3 wird ein Objekt 8 mit Laserlicht 1 bestrahlt. Das von dem Objekt 8 reflektierte Licht 23 wird einem Strahlteiler 24 zugeführt, der es in zwei Teilstrahlen aufteilt. Der eine Teilstrahl wird um 90° abgelenkt und auf den Piezospiegel 21 geworfen. Der andere Teil durchläuft den Teilerspiegel geradlinig und gelangt auf den Spiegel 25, der gegenüber der Strahrichtung 23 um den Winkel 26 geneigt ist. Die Neigung des Spiegels 25 kann verstellbar sein, wie durch die Doppelpfeile 27 angedeutet. Das von den Spiegeln 21, 25 reflektierte Licht gelangt dann durch das Objektiv 28 und die Blende 29 auf den CCD-Chip 30 (optoelektronischer Sensor). Die Daten können über die Leitung 31 von der Chip-Kamera einem in der Zeichnung nicht gezeigten Rechner zugeführt werden. Der Shearing-Effekt wird durch die Neigung des Spiegels 25 um den Winkel 26 erzeugt.

Wie aus Figur 3 ersichtlich, wird die Phasenverschiebung durch die Verschiebung des Spiegels 21 in Strahlrichtung 22 erzeugt. Die Shearing-Optik der Ausführungsform gemäß Figur 3 besteht aus dem Strahlteiler 24 und den Spiegeln 21, 25 (sowie den weiteren Bauteilen Objektiv 28, Blende 29 und CCD-Chip 30). Durch die Verwendung eines Piezospiegels ist eine sehr schnelle und gleichwohl zuverlässige und genaue Wegänderung und damit Phasenverschiebung möglich.

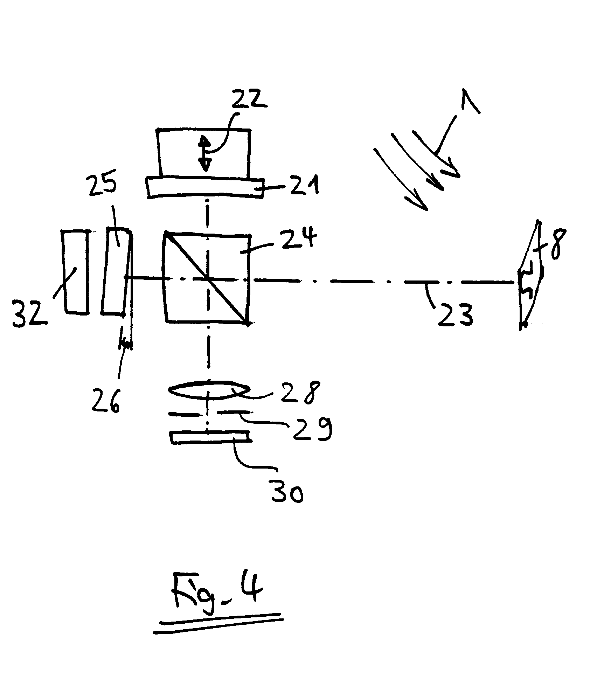

Die Figur 4 zeigt eine Abwandlung der Ausführungsform gemäß Figur 3, in der gleiche Teile mit gleichen Bezugszeichen bezeichnet sind, so daß sie nicht erneut im einzelnen erläutert werden müssen. Der Aufbau gemäß Figur 4 ist geeignet, den Gradienten der Verformung in zwei aufeinander senkrecht stehenden Richtungen zu bestimmen. Hinter dem Spiegel 25, der wiederum um den Winkel 26 geneigt ist, ist ein weiterer Spiegel 32 angeordnet, der ebenfalls gegenüber der Hauptachse 23 geneigt ist. Die Neigung des Spiegels 32 verläuft jedoch senkrecht zur Neigung des Spiegels 25; sie ist deshalb in der Zeichenebene der Figur 4 nicht darstellbar. Der Spiegel 25 ist für grüne Strahlung vollkommen durchlässig; er reflektiert nur rote Strahlung. Der Spiegel 32 reflektiert grüne Strahlung. Das Objekt 8 wird sowohl mit grünem als auch mit rotem Laserlicht 1 bestrahlt. Der rote Lichtanteil wird vom Spiegel 25 reflektiert; dieser rote Lichtanteil entspricht also dem Laserlicht der Figur 3. Der grüne Lichtanteil wird vom Spiegel 25 durchgelassen und vom Spiegel 32 reflektiert. Dieser Lichtanteil liefert eine entsprechende Information in einer um 90° gedrehten Richtung. Der Sensor 30 ist eine Farbvideokamera (es ist allerdings auch möglich, einen anderen farbempfindlichen Sensor vorzusehen). Der Rotanteil in der Farbvideokamera liefert die Information in einer Richtung, der Grünanteil liefert die Information in der darauf senkrecht stehenden Richtung.

## Patentansprüche

1. Verfahren zur Bestimmung der Wegänderung von Strahlen, vorzugsweise Lichtstrahlen, bei dem ein zu messendes Objekt (8) mit kohärenter Strahlung (1), vorzugsweise Laserlicht, einer bestimmten Frequenz bestrahlt wird,

die von dem Objekt reflektierte Strahlung (3, 4; 23) bzw. die das Objekt durchlaufende Strahlung durch eine Shearing-Optik (2; 24, 21, 25) in eine Bildebene (5) abgebildet wird

und dieser Vorgang anschließend bei verformten Objekt (8′) wiederholt wird,

dadurch gekennzeichnet,

daß das Bild durch einen in der Bildebene (5) angeordneten optoelektronischen Sensor (30), vorzugsweise eine Videokamera oder ein CCD-Array, registriert wird.

2. Verfahren nach Anspruch 1, dadurch gekennzeichnet, daß das von dem optoelektronischen Sensor registrierte Bild des in einem ersten Zustand befindlichen Objekts (8) in einem Speicher gespeichert wird

EP 0 485 728 A2

und daß das von dem optoelektronischen Sensor registrierte Bild des in einem zweiten Zustand befindlichen Objekts (8′) davon subtrahiert wird.

2. Verfahren nach Anspruch 2, dadurch gekennzeichnet, daß das Ergebnis der Subtraktion auf einem Bildschirm dargestellt wird.

4. Verfahren nach Anspruch 1, dadurch gekennzeichnet,
daß bei in einem ersten Zustand befindlichen Objekt (8) mehrere definiert phasenverschobene Bilder registriert werden,
daß daraus für jeden Bildpunkt die Phase bestimmt wird
und daß dieses Verfahren bei in einem zweiten Zustand befindlichen Objekt (8′) wiederholt wird.

5. Verfahren nach Anspruch 4, dadurch gekennzeichnet, daß für jeden Bildpunkt die Differenz der Phasen bestimmt wird.

6. Verfahren nach Anspruch 4 oder 5, dadurch gekennzeichnet, daß die Phasenverschiebung durch eine Bewegung des Keils (12) bzw. sonstigen Bauteils der Shearing-Optik in der Ebene der Strahlen (3, 4) mit einer Komponente parallel zur Bildebene (5) erzeugt wird.

7. Verfahren nach Anspruch 4 oder 5, dadurch gekennzeichnet, daß die Phasenverschiebung durch die Verschiebung eines Spiegels (21) in einer Shearing-Optik (24, 21, 25) mit einem Strahlteiler (24) und zwei Spiegeln (21, 25) erzeugt wird.

8. Verfahren nach einem der vorhergehenden Ansprüche, dadurch gekennzeichnet,
daß das zu messende Objekt (8) mit einer weiteren kohärenten Strahlung, vorzugsweise Laserlicht, einer weiteren, abweichenden Frequenz bestrahlt wird,
daß diese von dem Objekt reflektierte, weitere Strahlung bzw. diese das Objekt durchlaufende, weitere Strahlung durch eine weitere Shearing-Optik (24, 21, 32) in die Bildebene abgebildet wird, wobei die Richtung der weiteren Shearing-Optik im Winkel, vorzugsweise rechtwinklig, zur Richtung der ersten Shearing-Optik (24, 21, 25) verläuft,
und daß das Bild durch einen farbempfindlichen Sensor (30), vorzugsweise eine Farbvideokamera, registriert wird.

9. Vorrichtung zur Durchführung des Verfahrens nach einem der vorhergehenden Ansprüche, bestehend aus
einer Strahlungsquelle zum Bestrahlen eines zu messenden Objekts (8) mit kohärenter Strahlung (1), vorzugsweise Laserlicht, mit einer bestimmten Frequenz,
und einer Shearing-Optik (2; 24, 21, 25) zum Abbilden der von dem Objekt (8) reflektierten Strahlung bzw. der das Objekt durchlaufenden Strahlung in eine Bildebene (5),
gekennzeichnet durch,
einen in der Bildebene (5) angeordneten optoelektronischen Sensor, vorzugsweise eine Videokamera oder ein CCD-Array.

10. Vorrichtung nach Anspruch 9, gekennzeichnet durch einen Speicher zum Speichern eines oder mehrerer von dem optoelektronischen Sensor registrierten Bildes.

11. Vorrichtung nach Anspruch 9 oder 10, gekennzeichnet durch eine Auswerteeinheit zum Verarbeiten eines oder mehrerer von dem optoelektronischen Sensor registrierten Bilder und/oder eines oder mehrerer in dem Speicher gespeicherter Bilder.

12. Vorrichtung nach Anspruch 11, dadurch gekennzeichnet, daß die Auswerteeinheit zwei Bilder, die verschiedenen Zuständen (8, 8′) des Objekts entsprechen, voneinander subtrahiert.

13. Vorrichtung nach einem der Ansprüche 9 bis 12, gekennzeichnet durch einen Bildschirm zum Darstellen eines Bildes und/oder des Speicherinhalts und/oder der verarbeiteten Bilddaten und/oder der Subtraktion zweier Bilder.

14. Vorrichtung nach einem der Ansprüche 11 bis 13, dadurch gekennzeichnet, daß die Auswerteeinheit geeignet ist, aus mehreren definiert phasenverschobenen Bildern für jeden Bildpunkt die Phase zu bestimmen.

15. Vorrichtung nach Anspruch 14, dadurch gekennzeichnet, daß die Auswerteeinheit die Phase für jeden Bildpunkt bei zwei verschiedenen Zuständen des Objekts bestimmt.

16. Vorrichtung nach Anspruch 15, dadurch gekennzeichnet, daß die Auswerteeinheit die zu den zwei verschiedenen Zuständen des Objekts bestimmten Phasen voneinander subtrahiert.

17. Vorrichtung nach einem der Ansprüche 9 bis 16, dadurch gekennzeichnet, daß die Shearing-Optik einen Keil (12) aufweist.

18. Vorrichtung nach einem der Ansprüche 9 bis 16, dadurch gekennzeichnet, daß die Shearing-Optik (24, 21, 25) aus einem Strahlungsteiler (24) und zwei im Winkel von im wesentlichen 90° angeordneten Spiegeln (21, 25) besteht.

19. Vorrichtung nach Anspruch 18, dadurch gekennzeichnet, daß ein Spiegel (25) in der Neigung (26) verstellbar ist.

**20.** Vorrichtung nach Anspruch 18 oder 19, dadurch gekennzeichnet, daß ein Spiegel (21) in Richtung (22) senkrecht zu seiner Oberfläche verschiebbar ist.

**21.** Vorrichtung nach einem der Ansprüche 9 bis 20, gekennzeichnet durch

eine weitere Strahlungsquelle für kohärentes Licht, vorzugsweise Laserlicht, einer weiteren, abweichenden Frequenz,

einer weiteren Shearing-Optik (24, 21, 32), deren Richtung im Winkel, vorzugsweise rechtwinklig, zur Richtung der ersten Shearing-Optik (24, 21, 25) verläuft

und einem farbempfindlichen Sensor (30), vorzugsweise eine Farbvideokamera.

LASERLICHT

(1)

OBJEKT

(2)          (BILDEBENE (5)

(3)

(4)                                    (6)

(7)

VERFORMTER ZUSTAND          SHEARING OPTIK

AUSGANGSZUSTAND

Fig. 1

Bild 1:    Prinzip des Shearing Verfahrens

Bild 2:   Shearing Optiken

Shearing mit Keil

OBJEKT

SHEARING          OBJEKTIV
OPTIK      ハ2

ハハ

BILDEBENE

O1

B1/B2

~5

O2

~8

Fig. 2a

Shearing mit Biprisma

ハ3        ハハ

O1

B1/B2

~5

O2

~8

Fig. 2b

Shearing mit planparallelen Platten

Fig. 2c

8

ハ4       ハ

O1

B1/B2

~5

O2

ハ5

9

**Fig. 3**

Bild 3:  Shearing Optik mit 2 Spiegeln

Fig. 4